# EUROPÄISCHE PATENTSCHRIFT

(11) **EP 0 945 308 B1**
(45) Veröffentlichungstag und Bekanntmachung des Hinweises auf die Patenterteilung: **06.10.2004**
(21) Anmeldenummer: 99105518.7
(22) Anmeldetag: 18.03.1999
(51) Int. Cl.: B60R 16/02

(54) **Schaltungsanordnung für die Kraftfahrzeugelektrik**
Circuit arrangement for a vehicle electrical distribution centre
Arrangement de circuit pour une centrale électrique de voiture

(30) Priorität: 26.03.1998 DE 19813473
(43) Veröffentlichungstag der Anmeldung: 29.09.1999
(73) Patentinhaber: GHW Grote & Hartmann GmbH & Co. KG, 42369 Wuppertal (DE)
(72) Erfinder: Song, Jiang, Dr., 40629 Düsseldorf (DE); Moritz, Werner, 42369 Wuppertal (DE)
(74) Vertreter: Patentanwälte Dr. Solf & Zapf

(56) Entgegenhaltungen:
- EP-A- 0 417 480
- DE-A- 3 535 860
- DE-A- 4 329 860
- US-A- 5 581 130

## Beschreibung

Die Erfindung betrifft eine Schaltungsanordnung für die Kraftfahrzeugelektrik nach dem Oberbegriff des Anspruchs 1.

In der Zentralelektrik bzw. im Sicherungskasten von Kraftfahrzeugen laufen die Leitungen der meisten Verbraucher eines Kraftfahrzeuges zusammen. Die Zentralelektrik bzw. der Sicherungskasten (Sicherungs-Box) beherbergt im allgemeinen eine zentrale Zuleitung von der Batterie bzw. dem Generator, die Sicherungen für die Verbraucher sowie Steuerschalter für die Verbraucher beispielsweise ein Blinkrelais für den Fahrtrichtungszeiger.

Die Zentralelektrik ist meist in einem allseits bis auf die elektrischen Zu- und Ableitungen geschlossenen Kunststoffkasten mit einem Deckel untergebracht, der den Zugang zu den Sicherungen und den Relais ermöglichen soll. Dieser Kasten ist beispielsweise im Motorraum oder im Fahrerfußraum angeordnet.

Von der Zentralelektrik gehen Leitungsstränge zu den Schaltelementen der Verbraucher, beispielsweise zu dem Lichtschalter und von diesem wieder zurück zur Zentralelektrik und von dort zum Verbraucher, beispielsweise den Lichtquellen.

Teilweise sind diese Schalter auch im Bereich der Lenksäule angeordnet, beispielsweise die Schalter für die Betätigung des Fernlichts, des Warnblinklichts oder der Scheibenwischer. Diese Schalter können in Mehrfach-Schaltern zusammengefaßt sein, wobei die Betätigung dieser Mehrfach-Schalter meist mit einem Hebel erfolgt, wobei die einzelnen Schaltvorgänge mit bestimmten Hebelstellungen erreicht werden.

Darüber hinaus werden einige Verbraucher bzw. Verbrauchergruppen über das Zündschloß geschaltet. Diese Verbraucher sind beispielsweise die an den sogenannten Klemmen 15, 50 und 75 angeschlossenen Verbraucher wie Radio, Kombi-Instrument und bei kleineren Fahrzeugen auch der Anlasser. Bei den Klemmen bzw. Klemmenbezeichnungen handelt es sich um ein für die elektrische Anlage im Kraftfahrzeug festgelegtes System gemäß DIN 72552. Dieses System der Klemmenbezeichnungen soll ein möglichst fehlerfreies Anschließen der Leitungen an den Geräten, vor allem bei Reparaturen und Ersatzeihbauten ermöglichen. Die Klemmenbezeichnungen sind nicht gleichzeitig Leitungsbezeichnungen, da an den beiden Enden einer Leitung Geräte mit unterschiedlicher Klemmenbezeichnung angeschlossen sein können. Klemme 15 bereichnet das durch das Zündschloß geschaltete Plus hinter der Batterie, Klemme 50 bezeichnet die Startersteuerung, Klemme 75 bezeichnet die Klemme bzw. den Anschluß für Radio und Zigarettenanzünder sowie weitere Nebenverbraucher.

Für die vom Zündschloß geschalteten Verbrauchergruppen werden entsprechend dick.dimensionierte Leitungen, die auch Leistungsströme leiten müssen, von der Zentralelektrik zum Zündschloß und von diesem zurück zur Zentralelektrik geleitet, von wo sie an die Verbraucher weitergeleitet werden. Bei der bekannten Anordnung ist von Nachteil, daß eine Vielzahl von Leitungen von der Zentralelektrik zum Zündschloß geführt werden und daß das Zündschloß die entsprechenden Ströme schalten muß

Eine Schaltungsanordnung (Oberbegriff von Anspruch 1) der oben beschriebenen Art ist aus der DE 35 35 860 A bekannt, die ein relativ großes Kabelraumvolumen erfordert.

Aufgabe der Erfindung ist es, eine Schaltungsanordnung bzw. eine Zentralelektrik zu schaffen, welche eine einfachere Montage und weniger Kabelraumvolumen erfordert.

Die Aufgabe wird durch eine Schaltungsanordnung mit den Merkmalen des Anspruchs 1 gelöst. Vorteilhafte Ausgestaltungen sind in Unteransprüchen gekennzeichnet.

Erfindungsgemäß werden die Anzahl und der Querschnitt der Leitungen zwischen der Zentralelektrik und dem Zündschloß verringert. Dies wird dadurch erreicht, daß die Verbraucher bzw. Verbrauchergruppen, welche bisher direkt über das Zündschloß geschaltet wurden, nun indirekt über zusätzliche Leistungsschalter, wie Relais, in der Zentralelektrik bzw. im Bereich oder am Sicherungskasten geschaltet werden, d.h., daß für die Klemmen 15, 50 und 75 je zumindest ein Schaltrelais oder Leistungsschalter vorgesehen ist, mit denen die Klemme zentral geschaltet wird. Zum Zündschloß wird lediglich noch eine dünn dimensionierte und entsprechend schwach abgesicherte Steuerstromzuleitung und vom Zündschloß zu den Schaltrelais ebenfalls lediglich eine dünne Steuerstromleitung geführt. Für die vorgenannten drei Klemmen bedeutet dies bei einem Vorhandensein von je einem Schaltrelais pro Klemme, daß insgesamt nur noch vier dünne Leitungen für das Zündschloß benötigt werden. Erfindungsgemäß können auch die anderen, an der Lenksäule vorhandenen Schalter, insbesondere die Mehrfach-Schalter, lediglich noch Leistungsschalter, wie Schaltrelais, für die Verbraucher ansteuern, wobei auch diese Schaltrelais in oder an oder im Bereich der Zentralelektrik angeordnet sind.

Bei einer derartigen Ausgestaltung ist von Vorteil, daß von der Zentralelektrik in die Lenksäule nur noch entsprechend schwach dimensionierte Steuerleitungen gelegt werden müssen. Da pro zu schaltende Gruppe bzw. pro zu schaltendem Verbraucher eine entsprechend schwach dimensionierte Steuerstromleitung benötigt wird, werden pro Schalter je eine Zuleitung zum Schalter, wie z.B. zum Zündschloß, eingespart. Diese Zuleitungen mussten vormals ebenso wie die Ableitungen so ausgelegt sein, daß sie die entsprechenden Leistungsströme übertragen konnten, wobei für diese Leitungen noch zu beachten war, daß sie aufgrund ihrer Länge in ihrer Gesamtheit einen erheblichen Gesamtleistungsverlust verursacht haben. Darüber hinaus folgt aus der erfindungsgemäßen Schaltungsanordnung eine erhöhte Sicherheit insbesondere gegen Kabelbrände, da im Bereich der Lenksäule keine Leistungsschalter und Leitungen mehr vorhanden sind und bei Fehlfunktionen entsprechende Erwärmungen vermieden werden können. Als weiterer Vorteil kommt hinzu, daß die z.T. hohen Leistungen in der Zentralelektrik besser geschaltet und darüber hinaus durch gestanzte Leiterplatten oder Platinen sicher und widerstandsarm geleitet werden können. Hierbei werden der elektrische Widerstand und damit auch die Leistungsverluste minimiert. Des weiteren können kleinere Steckkontakte mit geringerer Kontaktfläche verwendet werden. Die erfindungsgemäße Schaltungsanordnung ermöglicht es, auch ein elektronisches Zündschloß zu verwenden.

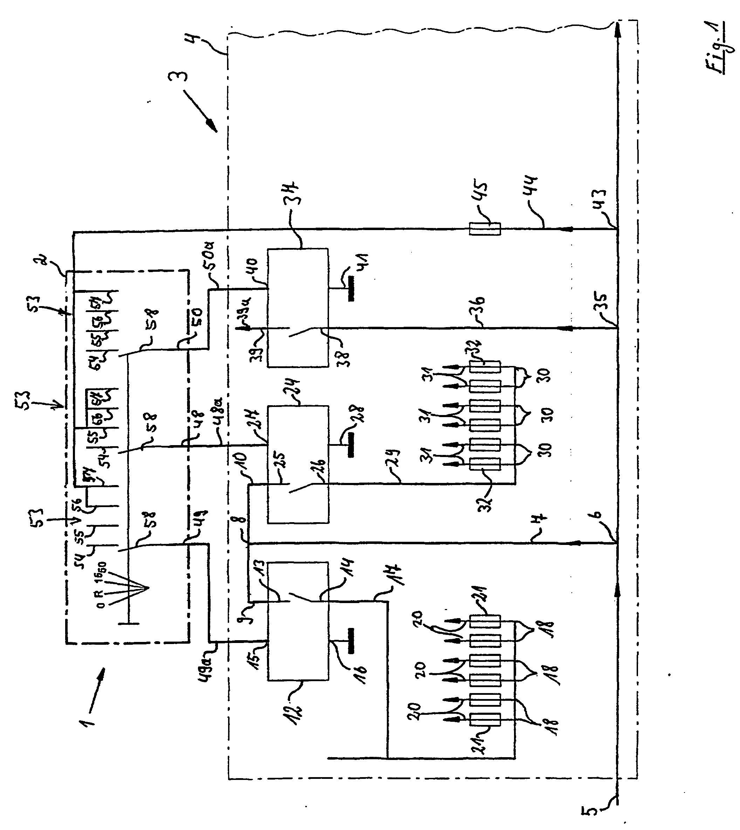

Im folgenden wird die Erfindung anhand einer Zeichnung beispielhaft erläutert, deren einzige Figur den Schaltplan einer Kraftfahrzeugeelektrik in einem schematisierten Ausschnitt zeigt.

Die äußeren Grenzen des Zündschlosses 1 sind schematisiert strichpunktiert mit einer Linie 2 dargestellt. Die äußeren Grenzen der Zentralelektrik bzw. des Sicherungskastens 3 sind schematisiert ebenfalls strichpunktiert mit einer Linie 4 bezeichnet.

Von der Stromquelle des Kraftfahrzeuges, welche je nach Betriebszustand ein Akkumulator oder ein Generator (nicht gezeigt) ist, führt eine Hauptzuleitung 5 in die Zentralelektrik 3 bzw. den Sicherungskasten 3.

Von der Hauptzuleitung 5 zweigt an einem ersten Knotenpunkt 6 eine erste Zuleitung 7 ab, welche sich an einem zweiten Knotenpunkt 8 in zwei Leitungen 9, 10 verzweigt.

Die Leitung 9 verläuft zu einem ersten Leistungsschalter 12. Der Leistungsschalter 12 weist einen Schalteingang 13, mit dem die Leitung 9 leitend verbunden ist, einen Schaltausgang 14, einen Steuereingang 15 und einen Steuerausgang bzw. Steuermasse 16 auf.

Vom Schaltausgang 14 verläuft eine Versorgungsleitung 17 zu einer Reihe von Knotenpunkten 18, an denen mehrere Verbraucher, in diesem Fall die üblicherweise an der Klemme 15 liegende Verbrauchergruppe mit Leitungen 20 abzweigen. Die Leitungen 20 sind im Bereich der Zentralelektrik 3 mit vor den Verbrauchern (nicht gezeigt) angeordneten Sicherungen 21 abgesichert.

Die Leitung 10 ist in gleicher Weise an einen weiteren Leistungsschalter 24 angeschlossen, wobei dieser Leistungsschalter 24 einen Schalteingang 25, einen Schaltausgang 26, einen Steuereingang 27 und eine Steuermasse bzw. einen Steuerausgang 28 aufweist. Die Leitung 10 ist leitend mit dem Schaltungseingang 25 verbunden. Vom Schaltungsausgang 26 verläuft eine Leitung 29 zu Knotenpunkten 30, von denen die Leitungen 31 der einzelnen Verbraucher, in diesem Fall der Verbraucher der Klemme 75, abgehen, wobei hinter den Knotenpunkten 30 Sicherungen 32 angeordnet sind.

Von der Hauptzuleitung 5 zweigt an einem weiteren Knotenpunkt 35 eine weitere Leitungen 36 ab, welche zu einem Leistungsschalter 37 geführt wird, welcher den Anlasserstrom schaltet. Der Leistungsschalter 37 weist einen Schalteingang 38, einen Schaltausgang 39, einen Steuereingang 40 sowie einen Steuerausgang bzw. Masseanschluß 41 auf. An dem Schaltausgang 39 ist die Zuleitung 39a zum Anlasser angeschlossen.

An einem weiteren Knotenpunkt 43 zweigt von der Hauptzuleitung 5 eine Zündschloß-Steuerstromzuleitung 44 ab, welche im Bereich der Zentralelektrik 3 mit einer Sicherung 45 abgesichert ist. Diese Zündschloß-Steuerstromzuleitung 44 wird aus der Zentralelektrik heraus zum Zündschloß 1 geführt. Das Zündschloß 1 ist in an sich bekanner Weise aufgebaut, wobei für die Klemme 75 ein Ausgang 48, für die Klemme 15 ein Ausgang 49 und für die Klemme 50 ein Ausgang 50 vorgesehen ist. Von den Ausgängen 48, 49, 50 verlaufen Steuerleitungen 48a, 49a und 50a zu den Steuereingängen 15, 27 und 40 der Leistungsschalter 12, 24 und 37. Im Zündschloß 1 ist für jede Klemme eine separate Schaltungsanordnung 53 vorgesehen, welche vier Kontaktpunkte 54, 55, 56 und 57 und jeweils einen Kontaktfinger 58 aufweist. Die Schaltungsanordnungen 53 bzw. die Kontaktfinger 58 werden gemeinsam durch das Drehen des Zündschlüssels betätigt, wobei die erste oder NullStellung keinen Kontakt herbeiführt. Je nach Verbrauchern ist die Steuerstromzuleitung mit den einzelnen Kontaktpunkten der Schaltungsanordnungen 53 so verbunden, daß die mit einer Schaltungsanordnung 53 verbundene Klemme in der ersten und/oder der zweiten und/oder erst der dritten Stellung durch Kontakt eines Kontaktpunktes 54, 55, 56, 57 mit einem Kontaktfinger 58 betätigt wird. Insbesondere der Anlasser wird üblicherweise in der Endstellung des Zündschlosses betätigt, so daß die Steuerstromzuleitung 44 über den Kontaktfinger 58 nur mit dem letzten Kontaktpunkt 57 der Schaltungsanordnung 53 für die Klemme 50 verbunden ist. Die Steuerstromableitungen 48a, 49a, 50a, welche aus dem Zündschloß 1 herausgeführt und in den Sicherungskasten 3 hineingeführt werden, stehen mit den Steuereingängen 15, 27, 40 in leitender Verbindung, so daß, wenn im Zündschloß 1 ein mit der Zündschloß-Steuerstromzuleitung 44 verbundener Kontaktpunkt 55, 56, 57 mit der Steuerstromableitung 48a, 49a, 50a über einen Kontaktfinger 58 verbunden wird, ein Steuerstrom in den Leistungsschalter 12, 24, 37 fließt und diesen zum Schließen des Schaltkontakts zwischen Schalteingang 13, 25, 38 und Schaltausgang 14, 26, 39 veranlaßt.

Besonders vorteilhaft ist es, wenn anstelle von Relais elektronische Steuerbausteine verwendet werden, welche nicht nur als Leistungsschalter dienen, sondern darüber hinaus an sich bekannte gesteuerte Sicherungen darstellen, wobei mit den elektronischen Bausteinen der Sicherheitszustand der Leitung, insbesondere die Temperatur, Stromstärke und/oder Spannungshöhe überwacht werden.

Die vorbeschriebene Schaltung kann in äquivalenter Weise auch für andere im Bereich der Lenksäule angeordnete Schalter, insbesondere Mehrfach-Schalter, verwendet werden, so daß vom Sicherungskasten zu den Mehrfach-Schaltern bzw. Kombi-Schaltern lediglich je eine Steuerstromleitung und pro Schalter bzw. Schalterstellung nur eine Steuerstromableitung vorhanden sein müssen, wobei mit der Steuerstromableitung jeweils ein Leistungsschalter im Sicherungskasten bzw. in der Zentralelektrik betätigt wird. Dadurch, daß die Leistungsschaltung in der Zentralelektrik durchgeführt wird, werden die Leistungsverluste, welche ansonsten in den Leistungsleitungen zu und von dem Zündschloß bzw. anderen im Lenksäulenbereich angeordneten Schaltern aufgetreten sind, vermieden. Die Ströme, die in der Zentralelektrik zu den Verbrauchern fließen, können in einfacher und besonders sicherer Weise über gestanzte Platinen bzw. Leitungsgitter oder Stromschienen in der Zentralelektrik geführt werden.

Dadurch, daß das Zündschloß nur noch relativ schwache Steuerströme schalten muß, ist es auch möglich, elektronische Zündschlösser zu verwenden.

## Patentansprüche

1. Schaltungsanordnung in der Kraftfahrzeugelektrik für elektrische Verbraucher, deren elektrische Zuleitungen von einer Sicherungsbox bzw. einer Zentralelektrik aus zu den Verbrauchern führen, wobei die Zuleitungen in der Zentralelektrik mit Sicherungen abgesichert sind,
wobei Schalter, insbesondere ein Zündschlossschalter vorhanden sind, welche außerhalb der Zentralelektrik bzw. der Sicherungsbox angeordnet sind, mit welchen die elektrischen Verbraucher geschaltet werden, und
wobei für die von außerhalb der Zentralelektrik angeordneten Schaltern zu schaltenden Verbraucher oder Verbrauchergruppen Leistungsschalter in der Zuleitung zu diesen Verbrauchern bzw. Verbrauchergruppen in der Zentralelektrik bzw. an der Sicherungs-Box angeordnet sind und mit diesen Schaltern, z. B. dem Zündschloss, derart verbunden sind, dass die Leistungsschalter mit diesen Schaltern z.B. Zündschloß, geschaltet werden und damit die Verbraucher bzw. Verbrauchergruppen des jeweiligen, in der Zentralelektrik bzw. an der Sicherungs-Box angeordneten Leistungsschalters indirekt mit dem außerhalb der Zentralelektrik angeordneten Schalter, insbesondere dem Zündschloss, geschaltet werden, **dadurch gekennzeichnet daß** an einem Knotenpunkt (43) von der Hauptzuleitung (5) eine Zündschloss-Steuerstromzuleitung (44) abzweigt, wobei im Bereich der Zentralelektrik (3) eine Sicherung (45) in der Zündschloss-Steuerstromzuleitung (44) vorgesehen ist, wobei die Zündschloss-Steuerstromzuleitung (44) aus der Zentralelektrik (3) heraus zum Zündschloss (1) geführt ist, wobei das Zündschloss (1) für die vom Zündschloss zu schaltenden Klemmen 15, 50, 75 Schaltausgänge (48, 49, 50) aufweist und von den Ausgängen (48, 49, 50) Steuerleitungen (48a, 49a, 50a) zu den Steuereingängen (15, 27, 40) der Leistungsschalter (12, 24, 37) geführt sind.

2. Schaltungsanordnung nach Anspruch 1,
**dadurch gekennzeichnet,**
**daß** für die von in bzw. an der Lenksäule angeordneten Schalter zu schaltenden Verbraucher oder Verbrauchergruppen Leistungsschalter in der Zentralelektrik vorhanden sind und mit den in bzw. an der Lenksäule angeordneten Schaltern derart verbunden sind, daß die Leistungsschalter für die Verbraucher mit den an der Lenksäule angeordneten Schaltern geschaltet werden.

3. Schaltungsanordnung nach Anspruch 1 und/oder 2,
**dadurch gekennzeichnet,**
**daß** die Leistungsschalter Relais sind.

4. Schaltungsanordnung nach Anspruch 1 und/oder 2,
**dadurch gekennzeichnet,**
**daß** die Leistungsschalter elektronische Leistungsschalter sind.

5. Schaltungsanordnung nach Anspruch 4,
**dadurch gekennzeichnet,**
**daß** die elektronischen Leistungsschalter als elektronisch gesteuerter Sicherungen für die zu schaltenden Verbraucher und deren Leitungen ausgebildet sind.

6. Schaltungsanordnung nach einem oder mehreren der vorhergehenden Ansprüche,
**dadurch gekennzeichnet,**
**daß** zu einem Steuerschalter, der mehrere Leistungsschalter steuert, lediglich eine Steuerstromzuleitung und pro Leistungsschalter eine Steuerstromableitung vorhanden ist.

7. Schaltungsanordnung nach einem oder mehreren der vorhergehenden Ansprüche,
**dadurch gekennzeichnet,**
**daß** von der Stromquelle des Kraftfahrzeuges eine Hauptstromzuleitung (5) in die Zentralelektrik (3) bzw. den Sicherungskasten (3) führt, wobei von der Hauptzuleitung (5) im Bereich der Zentralelektrik (3) Leitungen (7, 9,10, 36, 44) zu den Schalteingängen der Leistungsschalter führen und von den Schaltausgängen der Leistungsschalter Zuleitungen zu den Verbrauchern führen, wobei im Bereich der Zentralelektrik bzw. des Sicherungskastens in den Verbraucherzuleitungen Sicherungen angeordnet sind.

8. Schaltungsanordnung nach einem oder mehreren der vorhergehenden Ansprüche,
**dadurch gekennzeichnet,**
**daß** von der Hauptzuleitung (5) an einem ersten Knotenpunkt (6) eine erste Zuleitung (7) abzweigt, welche sich an einem zweiten Knotenpunkt (8) in zwei Leitungen (9, 10) verzweigt, wobei die Leitung (9) zu einem ersten Leistungsschalter (12) führt und mit einem Schalteingang (13) des Leistungsschalters (12) leitend verbunden ist, wobei an einem Schaltausgang (14) des Leistungsschalters (12) eine Versorgungsleitung (17) zu einer Reihe von Knotenpunkten (18) geführt ist, an denen mehrere Verbraucher mit Leitungen (20) abzweigen.

9. Schaltungsanordnung nach einem oder mehreren der vorhergehenden Ansprüche,
**dadurch gekennzeichnet,**
**daß** die Leitung (10) an einen Schalteingang (25) eines Leistungsschalters (24) angeschlossen ist, wobei vom Schaltungsausgang (26) eine Leitung (29) zu Knotenpunkten (30) verläuft, von denen Leitungen (31) von Verbrauchern, insbesondere von Verbrauchern der Fahrzeugklemme 75 abgehen.

10. Schaltungsanordnung nach einem oder mehreren der vorhergehenden Ansprüche,
**dadurch gekennzeichnet,**
**daß** von der Hauptzuleitung (5) an einem Knotenpunkt (35) eine Leitung (36) abzweigt, welche zu einem Leistungsschalter (37) geführt ist und mit einem Schalteingang (38) des Leistungsschalters (37) leitend in Verbindung steht, wobei an dem Schaltausgang (39) eine Zuleitung (39a) zum Anlasser des Kraftfahrzeuges führt.

## Claims

1. Circuit arrangement in motor vehicle electrics for electrical loads, the electrical feed lines of which lead from a fuse box or from a central electrical system to the loads, in which the feed lines in the central electrical system are protected against short circuits by fuses,
switches, in particular an ignition lock switch, which are arranged outside the central electrical system or the fuse box and by means of which the electrical loads are switched are present, and
for the loads or groups of loads which are to be switched by switches arranged outside the central electrical system, circuit breakers are arranged in the feed line to these loads or groups of loads in the central electrical system or on the fuse box and are connected to these switches, for example the ignition lock, such that the circuit breakers are switched by means of these switches, for example the ignition lock, and as a result the loads or groups of loads of the respective circuit breaker arranged in the central electrical system or on the fuse box are indirectly switched by means of the switch, in particular the ignition lock, arranged outside the central electrical system, **characterized in that** an ignition-lock control current feed line (44) branches off from the main feed line (5) at a node point (43), a fuse (45) being provided in the ignition-lock control current feed line (44) in the region of the central electrical system (3), the ignition-lock control current feed line (44) being led out of the central electrical system (3) to the ignition lock (1), the ignition lock (1) having switching outputs (48, 49, 50) for the terminals (15, 50, 75) to be switched by the ignition lock, and control lines (48a, 49a, 50a) being led from the outputs (48, 49, 50) to the control inputs (15, 27, 40) of the circuit breakers (12, 24, 37).

2. Circuit arrangement according to Claim 1, **characterized in that** for the loads or groups of loads to be switched by switches arranged in or on the steering column, circuit breakers are present in the central electrical system and are connected to the switches arranged in or on the steering column such that the circuit breakers for the loads are switched by means of the switches arranged on the steering column.

3. Circuit arrangement according to Claim 1 and/or 2, **characterized in that** the circuit breakers are relays.

4. Circuit arrangement according to Claim 1 and/or 2, **characterized in that** the circuit breakers are electronic circuit breakers.

5. Circuit arrangement according to Claim 4, **characterized in that** the electronic circuit breakers are in the form of electronically controlled fuses for the loads to be switched and the lines thereof.

6. Circuit arrangement according to one or more of the preceding claims, **characterized in that** there is only one control current feed line to a control switch which controls a number of circuit breakers, and one control current output line is present for each circuit breaker.

7. Circuit arrangement according to one or more of the preceding claims, **characterized in that** a primary current feed line (5) leads from the power source of the motor vehicle into the central electrical system (3) or the fuse box (3), lines (7, 9, 10, 36, 44) leading from the main feed line (5) in the region of the central electrical system (3) to the switching inputs of the circuit breakers and feed lines leading from the switching outputs of the circuit breakers to the loads, with fuses being arranged in the load feed lines in the region of the central electrical system or of the fuse box.

8. Circuit arrangement according to one or more of the preceding claims, **characterized in that** a first feed line (7) branches off from the main feed line (5) at a first node point (6) and, at a second node point (8), branches into two lines (9, 10), line (9) leading to a first circuit breaker (12) and being conductively connected to a switching input (13) of the circuit breaker (12) and a supply line (17) leading, at a switching output (14) of the circuit breaker (12), to a series of node points (18) at which a number of loads branch off via lines (20).

9. Circuit arrangement according to one or more of the preceding claims, **characterized in that** the line (10) is connected to a switching input (25) of a circuit breaker (24), a line (29) running from the switching output (26) to node points (30) from which lines (31) of loads, in particular of loads of the vehicle terminal (75), proceed.

10. Circuit arrangement according to one or more of the preceding claims, **characterized in that** a line (36) branches off from the main feed line (5) at a node point (35), leads to a circuit breaker (37) and is conductively connected to a switching input (38) of the circuit breaker (37), a feed line (39a) leading to the starter of the motor vehicle at the switching output (39).

## Revendications

1. Arrangement de circuit dans une centrale électrique de véhicule automobile pour charges électriques dont les lignes électriques d'amenée mènent aux charges en partant d'une boîte à coupe-circuit ou d'une unité électrique centrale, les lignes d'amenée étant protégées par des coupe-circuits à l'intérieur de l'unité électrique centrale, dans lequel sont prévus des interrupteurs, en particulier un interrupteur de serrure de contact, qui sont disposés à l'extérieur de l'unité électrique centrale ou de la boîte à coupe-circuit, et auxquels les charges électriques sont connectées et
dans lequel il est prévu, pour les charges ou groupes de charges qui doivent être connectés par des interrupteurs disposés à l'extérieur de l'unité électrique centrale, des interrupteurs de puissance disposés dans l'unité électrique centrale ou sur la boîte à coupe-circuit, intercalés dans la ligne d'amenée aboutissant à ces charges ou groupes de charges et connectés à ces interrupteurs, par exemple à la serrure de contact, de telle manière que les interrupteurs de puissance soient connectés à ces interrupteurs, par exemple à la serrure de contact et que, de cette façon, les charges ou groupes de charges de l'interrupteur de puissance considéré disposé dans l'unité électrique centrale ou dans la boîte à coupe-circuit, soient connectés indirectement à l'interrupteur disposé à l'extérieur de l'unité électrique centrale, en particulier à la serrure de contact,
**caractérisé en ce qu'**une ligne d'amenée de courant de commande de la serrure de contact est branchée sur la ligne d'amenée principale, à un point de noeud (43), cependant que, dans la région de l'unité électrique centrale (3), un coupe-circuit (45) est prévu dans la ligne d'amenée de courant de commande de la serrure de contact (44), la ligne d'amenée de courant de commande de la serrure de contact (44) sortant de l'unité électrique centrale (3) pour aboutir à la serrure de contact (1), la serrure de contact (1) présentant des sorties de commutation (48, 49, 50) pour les bornes (15, 50, 75) qui doivent être commutées par la serrure de contact, et des lignes de commande (48a, 49a, 50a) s'étendant des sorties (48, 49, 50) aux entrées de commande (15, 27, 40) des interrupteurs de puissance (12, 24, 37).

2. Montage selon la revendication 1,
**caractérisé en ce qu'**il est prévu, pour les charges ou groupes de charges qui doivent être commutés par des interrupteurs disposés dans ou sur la colonne de direction, des interrupteurs de puissance placés dans l'unité électrique centrale et qui sont connectés aux interrupteurs disposés dans ou sur la colonne de direction, de telle manière que les interrupteurs de puissance pour les charges soient commutés avec les interrupteurs disposés sur la colonne de direction.

3. Montage selon la revendication 1 et/ou 2,
**caractérisé en ce que** les interrupteurs de puissance sont des relais.

4. Montage selon la revendication 1 et/ou 2,
**caractérisé en ce que** les interrupteurs de puissance sont des interrupteurs de puissance électroniques.

5. Montage selon la revendication 4,
**caractérisé en ce que** les interrupteurs de puissance électroniques sont constitués par des coupe-circuits commandés électroniquement pour les charges destinées à être commutées et pour leur lignes.

6. Montage selon une ou plusieurs des revendications précédentes,
**caractérisé en ce que**, pour un interrupteur de commande qui commande plusieurs interrupteurs de puissance, il est prévu seulement une ligne d'amenée de courant de commande et, pour chaque interrupteur de puissance, il est prévu une ligne de départ du courant de commande.

7. Montage selon une ou plusieurs des revendications précédentes,
**caractérisé en ce que**, de la source de courant électrique du véhicule automobile, part une ligne d'amenée de courant principale (5) menant à l'unité électrique centrale (3) ou à la boîte à coupe-circuit (3), cependant que, de la ligne d'amenée principale (5), dans la région de l'unité électrique centrale (3), partent des lignes (7, 9, 10, 36, 44) menant aux entrées de commutation des interrupteurs de puissance et que, des sorties de commutation des interrupteurs de puissance, partent des lignes d'amenée aboutissant aux charges, des coupe-circuits étant disposés dans les lignes d'amenée aux charges dans la région de l'unité électrique centrale ou de la boîte à coupe-circuit.

8. Montage selon une ou plusieurs des revendications précédentes,
**caractérisé en ce que**, sur la ligne d'amenée principale (5), est branchée, à un premier point de noeud (6), une première ligne d'amenée (7) qui se ramifie en deux lignes (9, 10) au niveau d'un deuxième point de noeud (8), la ligne (9) conduisant à un premier interrupteur de puissance (12) et étant reliée par une liaison conductrice à une entrée de commutation (13) de l'interrupteur de puissance (12), cependant qu'à une sortie de commutation (14) de l'interrupteur de puissance (12), part une ligne d'alimentation (17) qui mène à une série de points de noeud (18) sur lesquels plusieurs charges se branchent par des lignes (20).

9. Montage selon une ou plusieurs des revendications précédentes,
**caractérisé en ce que** la ligne (10) est connectée à une entrée de commutation (25) d'un interrupteur de puissance (24), tandis que, de la sortie de commutation (26), part une ligne (29) aboutissant à des points de noeuds (30), d'où partent des lignes (31) de charges, en particulier de charges de la borne (75) du véhicule.

10. Montage selon une ou plusieurs des revendications précédentes,
**caractérisé en ce que**, sur la ligne d'amenée principale (5) est branchée, à un point de noeud (35), une ligne (36) qui mène à un interrupteur de puissance (37) et est en liaison conductrice avec une entrée de commutation (38) de l'interrupteur de puissance (37), tandis que, de la sortie de commutation (39), part une ligne d'amenée (39a) aboutissant au démarreur du véhicule automobile.
